Europäisches Patentamt

European Patent Office

Office européen des brevets

(11) Publication number: 0 279 981 A1

# EUROPEAN PATENT APPLICATION

(21) Application number: 87309755.4

(22) Date of filing: 04.11.87

(51) Int. Cl.⁴ B60T 8/48

(30) Priority: 09.02.87 GB 8702848

(43) Date of publication of application:
31.08.88 Bulletin 88/35

(84) Designated Contracting States:
DE FR GB IT

(71) Applicant: LUCAS INDUSTRIES public limited
company
Great King Street
Birmingham, B19 2XF West Midlands(GB)

(72) Inventor: Farr, Glyn Phillip Reginald
21 The Hamlet
Leek Wootton Warwickshire(GB)

(74) Representative: Spall, Christopher John et al
BARKER, BRETTELL & DUNCAN 138 Hagley
Road
Edgbaston Birmingham B16 9PW(GB)

(54) Improvements in hydraulic booster and master cylinder assemblies for vehicle braking systems.

(57) In a combined booster and tandem master cylinder assembly (10) for a vehicle braking system an actuating piston (18) includes an auxiliary bore (30) in which works an auxiliary piston (31) coupled to the pedal (11). A chamber (33) defined in the bore (30) by the piston (31) is connected to a recuperation reservoir or through a one-way valve (34) and a restricted passage (35). The chamber (33) is adapted to be filled through the one-way valve (34) with fluid when the actuating piston (18) moves relatively away from the auxiliary piston (31) during "traction control" in order to provide an instantaneous pedal reaction with the one-way valve (34) closed, should the driver switch to a brake-applying mode.

EP 0 279 981 A1

## IMPROVEMENTS IN HYDRAULIC BOOSTER AND MASTER CYLINDER ASSEMBLIES FOR VEHICLE BRAKING SYSTEMS

This invention relates to hydraulic booster and master cylinder assemblies for vehicle braking systems of the kind particularly adapted for use in hydraulic braking systems in which operation of the master cylinder for normal service operation of wheel brakes is augmented by a booster chamber of which pressurisation is initiated by a pedal, and operation of the master cylinder for traction control of a spinning driven wheel is initiated independently of the pedal by means responsive to excessive acceleration of the wheel.

When a master cylinder of the kind set forth is operated for traction control, the piston or pistons of the master cylinder move relatively away from the pedal in response to pressurisation of the booster chamber. It follows, therefore, that if during traction control, the driver transfers his foot to the pedal, an excessive travel of the pedal will normally be experienced before the driver feels any pedal reaction. This is due to an actuating piston with which the pedal co-operates to initiate brake application for normal service vehicle retardation having moved relatively away from the pedal during traction control.

According to our invention in a booster and master cylinder assembly having an actuating piston to initiate operation of the assembly, and a pedal co-operating with the actuating piston for normal service braking, the actuating piston is operated independently of the pedal for traction control, and the pedal acts on the actuating piston through an auxiliary piston working in an auxiliary bore in the actuating piston, a damper chamber being defined between the auxiliary piston and the auxiliary bore fills with fluid as the actuating piston moves relatively away from the auxiliary piston.

As the actuating piston moves relatively away from the pedal during traction control, fluid from the reservoir enters the chamber through a passage. Thus, should the driver then wish to apply the brakes for normal service vehicle retardation, an applying force applied to the pedal is transferred to the auxiliary piston which, in turn, is advanced in the auxiliary bore. This enables the brake-applying force to be transmitted to the actuating piston through the fluid trapped in the chamber of which the volume may decrease at a rate determined by flow through a restricted passage.

The driver will not therefore experience a long pedal travel, but will feel an instantaneous pedal reaction and braking effort, although the pedal will fall slowly in response to the reduction in the volume of the chamber by the return flow through the restricted passage.

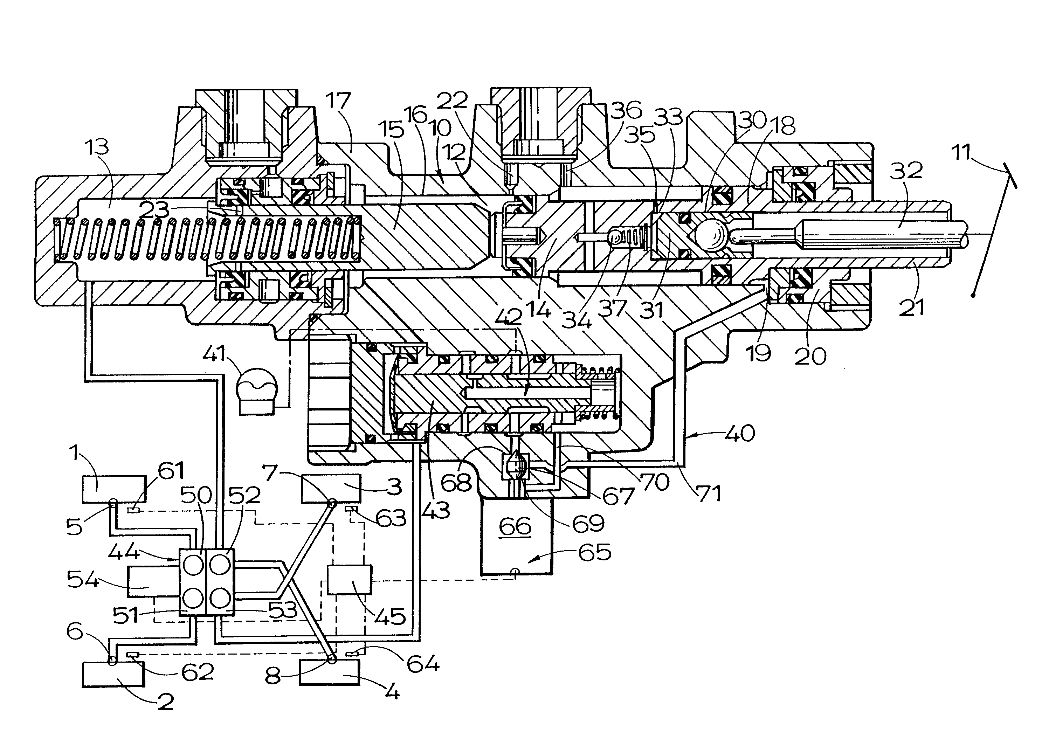

One embodiment of our invention is illustrated in the single Figure of the accompanying drawings which is a layout of an hydraulic system for a four wheel vehicle.

In the hydraulic system illustrated in the accompanying drawings front wheels 1, 2 are driven from the engine of the vehicle through a conventional gear box and differential assembly. The wheels 3, 4 are non-driven and freely rotatable.

The front wheels 1, 2 are provided with brakes 5, 6 respectively, and the rear wheels 3, 4 with brakes 7 and 8 respectively.

A combined hydraulic booster and tandem master cylinder assembly 10 operable by a pedal 11 for normal service braking, is incorporated in the system.

The assembly 10 comprises primary and secondary pressure spaces 12 and 13 in front of primary and secondary pistons 14 and 15 which work in a common bore 16 in a housing 17. The primary piston 14 is of differential outline working in a stepped portion of the bore 16. The portion 18 of the piston 14 which is of greater diameter constitutes a booster piston which is exposed to pressure in a booster space 19 defined between the piston 14 and an end closure 20 for that end of the bore 16 and through a sealed opening in which an axial extension 21 of reduced diameter projects rearwardly. The primary pressure space 12 in front of the primary piston 14 normally communicates with a reservoir for fluid through a recuperation port 22 in the wall of the housing 17 of the assembly. Similarly the secondary pressure space 13 in front of the secondary piston 15 normally communicates with the reservoir through a recuperation port 23 in the wall of the piston 15 itself.

The primary piston 14 is formed with auxiliary bore 30 in which works an auxiliary piston 31, and the piston 31 is coupled to the inner end of a push-rod 32 operated by the pedal 11. A damper chamber 33 defined in the auxiliary bore 30 by the inner end of the auxiliary piston 31 is connected to the reservoir through a one-way valve 34, a restricted radial passage 35, and a balance port 36 in the wall of the housing 17. The one-way valve 34 is normally urged into a closed position by means of a light spring 37.

To operate the booster by pressurisation of the booster space 19, hydraulic fluid under pressure is supplied to it through an internal passage 40 from an hydraulic accumulator 41, under the control of a servo-pressure control valve 42 incorporating a control spool 43. The spool valve 42 is housed in the housing 17, and is operated by a relatively small forward movement of the piston 14 sufficient to pressurise the pressure space 12 slightly and to which one end of the spool 43 is exposed.

The brake 5 on the front wheel 1 and the brake 8 on the diagonally opposite rear wheel 4 are both applied from the pressure space 13 of the master cylinder assembly 10, and the brake 6 on the front wheel 2 and the brake 7 on the diagonally opposite rear wheel 3 are both applied from the pressure space 12. Thus the system is of the 'X' split type.

The supply of fluid to the brakes is modulated by a modulator assembly 44 which is adapted to control operation of the brakes independently of each other in response to energising current from an electronic control module 45.

The modulator assembly 44 comprises four separate modulators 50, 51, 52, and 53 of known type. Specifically a single pump assembly driven by an electric motor 54 provides the source of power to replenish the fluid relieved from the brakes at the termination of a skid signal and the pump assembly is also operative to charge the accumulator 41 by fluid drawn from the reservoir. The pump assembly conveniently forms the subject of our co-pending patent application No.    of even date and need not be described further herein. Each modulator 50, 51, 52 and 53 incorporates a solenoid-operated valve operative in response to a signal from a respective speed sensor 61, 62, 63 and 64 to initiate modulation of the supply of fluid from the respective pressure space 13, 12 to the respective brake 5, 6, 7 and 8. Electrical signals from the sensors are fed into the electronic control module 25 which, depending on the nature and duration of any signal, may emit an energising current.

When the brakes 5, 6, 7 and 8 are to be applied for normal service operation to effect retardation of the vehicle, the pedal 11 acts to advance the boost piston 18 in the bore 16. This action operates the spool valve 42, as described above, and high pressure fluid from the accumulator 41 supplied to the booster space 19 acts to advance the piston 14 in the bore 16 to augment the force from the pedal 11. Pressurised fluid is supplied simultaneously from both pressure spaces 12 and 13 to the brakes 5 and 6 of the driven front wheels 1 and 2, and to the rear wheel brakes 8 and 7, from the respective diagonally opposite front wheels 5, 6.

The behaviour of the braked front wheels 1, 2, and rear wheels 3, 4, is controlled by the respective modulators in a known manner in response to energising currents from the control module 45 which in turn, depend, upon the signals from the respective speed sensors 61, 62, 63 and 64.

In the event of the pressure applied to one of the brakes 5, 6, 7, 8 being relieved to correct a skid condition, the brake fluid is replenished automatically by the pump driven by the motor 54 and incorporated in the modulator assembly 44.

The assembly 10 is modified so that it can be operated independently of the pedal 11 to prevent the front driven wheels from spinning when subjected to a driving torque in excess of the gripping force between the tyre of such a wheel and the road and other surfaces.

As illustrated in the drawings the assembly incorporates a traction-control solenoid-operated valve 65. The valve 65 comprises a solenoid 66 adapted to be energised by a current from the control module 45, and adapted to control a valve head 67 engageable alternately with spaced valve seatings 68 and 69. The seating 69 is disposed between two different sections 70 and 71 of the passage 40 to control communication therebetween. The seating 68 is located between the spool valve 42 and the passage section 71 to provide direct communication between the accumulator 41 and the booster space 19.

Normally, when the solenoid 66 is de-energised, the valve head 67 is urged into engagement with the seating 68 by means of a spring (not shown). This places the two passage sections 70 and 71 in direct communication, but cuts-off direct communication between the accumulator 41 and the section 71. The accumulator 41 can, however, still communicate with the passage 40 under the control of the spool valve 42 to control boosteroperation of the assembly 10 in order to apply the brakes 5, 6, 7 and 8 for vehicle retardation as described above.

In the event of one of the driven wheels, say the wheel 1, being subjected to an excessive wheel acceleration, indicative of a "wheel spin" condition, the signal from the respective speed sensor 61 received by the control module 45 causes the module to emit an electrical current which energises the solenoid 66 in turn to urge the head 67 away from the seating 68 and into engagement with the seating 69. This isolates the passage section 70 from the section 71, and places the accumulator 41 in direct communication with the passage section 71 to pressurise the booster space 19. The assembly 10 then operates as described above with fluid from the pressure spaces 12 and 13 being supplied to the modulator assembly 44 which, in turn, supplies fluid under pressure to the brake 5 only in order to brake the wheel 1.

When traction is restored to the wheel 1, the signal from the sensor 61 reduces and the solenoid 66 is de-energised with the valve 65 returning to its initial position.

The control module 45 is operative to differentiate signals from the speed sensors 61, 62, 63 and 64 and, when it receives signals from either sensor 61 or 62, indicative of a "wheel spin" condition in either wheel, the control module 45 not only energises the solenoid 66 as described above, but also energises the solenoid of the valve in the modulator 51 or 50 leading to the non-spinning wheel on the surface of higher (µ) to prevent the brake on that wheel from being applied. It also energises the solenoids of the modulators 52 and 53 to prevent the rear wheel brakes 7 and 8 from being applied.

Thus in a "wheel spin" preventing mode the modulator assembly 44 acts in an opposite sense from that of the anti-lock mode described above.

When the assembly 10 is operated to apply the brakes normally the auxiliary piston 31 acts on the primary piston 14 to advance it in the bore and initiate operation of the assembly with boost assistance, in a known manner. The effective volume of the chamber 33 is therefore at a minimum. During such braking operations the traction-control solenoid-operated valve 65 is inoperative.

During "traction control" the assembly 10 is operated independently of the pedal to control "wheel spin" as described above. Since the pedal 11, the push-rod 37 and the auxiliary piston 31 are restrained against movement, the primary piston 14 moves relatively away from the auxiliary piston 31 and the effective volume of the chamber 33 is increased and is filled with fluid by flow through the one-way valve 34 which opens against the loading in the light spring 37.

Should the driver transfer his foot from the accelerator to the brake pedal 11, any brake-applying force is transmitted through the push-rod 32 to the auxiliary piston 31 and the chamber 33 is pressurised. The one-way valve 34 closes and the fluid is expelled from the chamber 33 at a rate determined by flow through the passage 35.

During this operation the driver will not experience a sudden long pedal travel, but will feel an instantaneous pedal reaction and braking effort, although the brake pedal will slowly fall in response to the reduction in the effective volume of the chamber 33 as described above.

## Claims

1. An hydraulic booster and master cylinder assembly for a vehicle braking system in which the assembly has an actuating piston (18) to initiate operation of the assembly, and a pedal (11) co-operates with the actuating piston for normal service operation of brakes, the actuating piston being adapted to be operated independently of the pedal (11) for traction control of a spinning driven wheel, characterised in that pedal (11) acts on the actuating piston (18) through an auxiliary piston (31) working in an auxiliary bore (30) in the actuating piston, and a damper chamber (33) defined between the auxiliary piston and the auxiliary bore is adapted to fill with fluid as the actuating piston moves relatively away from the auxiliary piston.

2. An assembly as claimed in claim 1, characterised in that fluid from a recuperation reservoir for the assembly enters the damper chamber (33) through a passage in the actuating piston (18) as the actuating piston moves relatively away from the auxiliary piston.

3. An assembly as claimed in claim 1 or 2, characterised in that fluid is drawn into the damper chamber through a one-way valve (34).

4. An assembly as claimed in any preceding claim characterised in that the two pistons (18 and 31) are adapted to move relatively towards each other at a rate determined by flow through a restricted passage (35) of fluid trapped in the damper chamber (33).

5. A vehicle hydraulic braking system incorporating an hydraulic booster and master cylinder assembly as claimed in any one of the preceding claims, characterised in that operation of the master cylinder for normal service operation of wheel brakes is augmented by a booster chamber (19) defined between the actuating piston (18) and a closure (20) for an end of the bore (16) in which the piston (18 works, and a servo-pressure control valve (42) is operative to control the generation of servo assistance by pressurising the booster chamber (19) in response to pressure generated by operation of the pedal (11), traction control valve means (65) responsive to a spin signal from a driven wheel being adapted to control the generation of servo assistance for the assembly, whereby to actuate the assembly independently of the pedal (11), with the actuating piston (18) moving relatively away from the auxiliary piston (31).

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | GB-A-2 168 771 (BOSCH)<br>* Abstract; figure 1 * | 1,5 | B 60 T 8/48 |
| A | | 2,4 | |
| | --- | | |
| A | GB-A-2 149 035 (TEVES)<br>* Abstract; figure 1 * | 1,2,5 | |
| | --- | | |
| A | FR-A-2 565 183 (BOSCH)<br>* Abstract; figure 1 * | 1,2,5 | |
| | ----- | | |

TECHNICAL FIELDS
SEARCHED (Int. Cl.4)

B 60 T

The present search report has been drawn up for all claims

| Place of search | Date of completion of the search | Examiner |
|---|---|---|
| THE HAGUE | 13-05-1988 | BLURTON M.D |